# EUROPEAN PATENT SPECIFICATION

(11) **EP 0 787 755 B1**
(45) Date of publication and mention of the grant of the patent: **10.05.2000**
(21) Application number: 96121015.0
(22) Date of filing: 31.12.1996
(51) Int. Cl.: C08G 63/00, C09D 187/00, C08J 7/04, B32B 27/08

(54) **Polyester-modified ethylene-vinyl alcohol copolymer resin, and production process and use thereof**
Polyester modifiziertes Ethylen-Vinylalkohol-Kopolymer, deren Herstellung und Verwendung
Copolymère éthylène-alcoolvinylique modifié par un polyester, son procédé de préparation et son utilisation

(30) Priority: 05.02.1996 JP 4026996
(43) Date of publication of application: 06.08.1997
(73) Proprietor: DAINICHISEIKA COLOR & CHEMICALS MFG. CO. LTD., Chuo-ku Tokyo (JP); UKIMA COLOUR & CHEMICALS MFG. CO. LTD., Chuo-ku Tokyo (JP)
(72) Inventor: Hanada, Kazuyuki, Dainichiseika Color, Nihonbashi, Chuo-ku, Tokyo (JP); Kuriyama, Katsumi, Dainichiseika Color, Nihonbashi, Chuo-ku, Tokyo (JP)
(74) Representative: Wächtershäuser, Günter, Prof. Dr.

(56) References cited:
- EP-A- 0 041 629
- EP-A- 0 639 600
- DATABASE WPI Week 8526 Derwent Publications Ltd., London, GB; AN 85-157191 XP002046385 & JP 60 090 208 A (KANEGAFUCHI CHEM KK) , 21 May 1985

## Description

### BACKGROUND OF THE INVENTION

### a) Field of the Invention

This invention relates to a novel ethylene-vinyl alcohol resin (hereinafter called "EVOH resin" for the sake of brevity) and also to its production process and use. More specifically, the present invention is concerned with a novel polyester-modified EVOH resin (hereinafter called "PES-EVOH resin" for the sake of brevity) excellent in softness and flexibility, flexural resistance, formability, gas barrier property and safety and useful *inter alia* as films, wrapping materials, forming materials, and binders for various coating materials, and coating formulations and the like and also with its production process and use.

### b) Description of the Related Art

Graft polymers of polylactones are known from EP-A 0 041 629 and EP-A 0 639 600.

Conventional EVOH resins are widely known as thermoplastic resins excellent in properties such as gas barrier property, oil resistance, solvent resistance, mechanical strength and transparency and also superb in processing characteristics. They have been extensively used as forming materials for films, sheets and packages in various wrapping fields and also as various forming materials for machine parts, electrical and electronic parts, precision equipments and the like.

However, the above-described conventional EVOH resins are accompanied by drawbacks that they are hard and brittle resins and lack softness and flexibility. When such EVOH resins are applied as wrapping materials or forming materials and are subjected to repeated bending during use, the resulting formed products therefore develop cracks or pinholes and fail to retain their excellent properties.

With a view to avoiding occurrence of cracks or pinholes in formed EVOH resin products such as films or sheets, it has been contemplated, for example, to add various plasticizers to EVOH resins [see Japanese Patent Application Laid-Open (Kokai) No. SHO 59-20345] or to blend other thermoplastic resins such as polyamide resins to EVOH resins [see Japanese Patent Application Laid-Open (Kokai) No. SHO 58-36412].

When a plasticizer is added to impart softness and flexibility to an EVOH resin, it is necessary to add the plasticizer in a proportion of 10 to 20 parts by weight per 100 parts by weight of the EVOH resin. The addition of the plasticizer however involves many problems, for example, excellent properties of the EVOH resin, such as gas barrier property, are deteriorated; bonding failure or aging takes place due to bleeding or the like of the plasticizer; and the plasticizer undergoes substantial evaporation during melt extrusion or the like, whereby the quality or workability of the product is lowered and the environment is contaminated. The use of a plasticizer is therefore not practical.

In a blend of an EVOH resin and a polyamide resin, on the other hand, a chemical reaction takes place between the EVOH resin and the polyamide resin, leading to a problem such as inclusion of gel-like matter in a formed product or intense coloring. Further, the blending of an EVOH resin with a general thermoplastic resin is accompanied by the problem that, due to a difference in stretchability between both resins upon formation under heat and stretching, ply separation, cracking, uneven stretching or the like occurs in a formed product such as a film.

### SUMMARY OF THE INVENTION

Accordingly, an object of the present invention is to provide an excellent novel EVOH resin also excellent in flexibility, flexural resistance and safety without impairing the inherent gas barrier property, oil resistance, solvent resistance, transparency and forming or processing characteristics of EVOH resins , a coating composition making use of the resin and suitable for use on formed products of a plasticized vinyl chloride resin, and a gas barrier material making use of the resin.

The above-described object of the present invention can be achieved by the present invention as described hereinafter. Namely, the present invention provides a PES-EVOH resin characterized in that an aliphatic polylactone polyester is grafted on an EVOH resin, the content of said polyester is from 2 to 98 wt.%, the content of said EVOH resin is from 98 to 2 wt.%, and the number average molecular weight is from 10,000 to 600,000, a production process thereof, a coating composition making use of the resin and suitable for use on formed products of a plasticized vinyl chloride resin, and also a gas barrier material making use of the resin.

The PES-EVOH resin according to the present invention can readily produce films, sheets or the like excellent in softness and flexibility, waterproofness, forming characteristics, gas barrier property, safety and the like even by a forming process other than the solution process.

Further, the coating composition for the formed products of the plasticized vinyl chloride resin, said composition containing the PES-EVOH resin according to the present invention can give excellent films which can prevent bleeding-out of the plasticizer from the formed products of the plasticized vinyl chloride resin and can hence prevent staining of surfaces of the formed products.

The gas barrier material according to the present invention is provided with a gas barrier film excellent in gas barrier property, forming characteristics, mechanical strength and flexibility.

The gas barrier material according to the present invention is a material useful in the wrapping fields of foods, pharmaceuticals, cosmetics and daily necessities and also in other fields where gas barrier property is required.

In addition, the gas barrier material according to the present invention can be produced with high productivity at low cost. Upon waste disposal, it gives off neither toxic gas nor harmful substance, thereby permitting incineration.

### DETAILED DESCRIPTION OF THE INVENTION AND PREFERRED EMBODIMENTS

The PES-EVOH resin according to the present invention is a thermoplastic resin in which the aliphatic polyester is grafted on vinyl alcohol moieties of the EVOH resin as a raw material.

The PES-EVOH resin according to the present invention can be produced, for example, by a process that a lactone is subjected to ring-opening polymerization in the presence of the EVOH resin or by a process that the EVOH resin is reacted with a polylactone polyester available by subjecting an aliphatic polyester or lactone, which has been formed through an ordinary condensation polymerization reaction, to ring-opening polymerization and containing carboxyl groups at terminals thereof.

As the PES-EVOH resin with the polyester grafted on the EVOH resin as a raw material can be readily obtained by a single-step reaction, the process that the lactone is subjected to the ring-opening polymerization in the presence of the EVOH resin as the raw material requires fewer steps, is simpler and is hence more preferred than the process that the polyester is formed in advance by the ring-opening polymerization reaction or the condensation polymerization reaction and the polyester is then reacted with the EVOH resin as the raw material.

A detailed description will hereinafter be made about the process in which the lactone is subjected to the ring-opening polymerization in the presence of the EVOH resin as the raw material.

The EVOH resin which is employed as the raw material in the present invention is a resin which is available by saponifying some of vinyl acetate units of an ethylene-vinyl acetate copolymer resin. In view of the forming characteristics, gas barrier property and the like of the resulting PES-EVOH resin, the EVOH resin employed as the raw material preferably have ethylene units at a content of from 20 to 60 mole % and vinyl acetate units at a content of from 80 to 40 mole %. More preferably, the content of ethylene units ranges from 25 to 55 mole % and the content of vinyl acetate units ranges from 75 to 45 mole %, with 90 mole % or higher, further 95 mole % or higher of the vinyl acetate units being saponified preferably.

If the content of the ethylene units in the EVOH resin as the raw material is lower than 20 mole %, the resulting PES-EVOH resin has deteriorated forming characteristics so that, when formed into a film, for example, the gas barrier property is deteriorated under high humidity. If the content of the ethylene units in the EVOH resin as the raw material is higher than 60 mole %, the gas barrier property, the characteristic inherent to the EVOH resin, is lost. Ethylene unit contents outside the above range are therefore not preferred.

The lactone which is reacted with the EVOH resin as the raw material in the present invention is a lactone which can form a polyester by a conventionally-known ring-opening polymerization process of lactones, such as an ε-caprolactone or δ-valerolactone.

Although no particular limitation is imposed on the lactone usable in the present invention insofar as it undergoes ring-opening polymerization, ε-caprolactones and δ-valerolactones are particularly preferred. Illustrative of ε-caprolactones are e-caprolactone; monoalkyl-ε-caprolactones in each of which the alkyl group has about 1-5 carbon atoms, such as monomethyl-ε-caprolactone, monoethyl-ε-caprolactone, monopropyl-ε-caprolactone and monododecyl-ε-caprolactone; dialkyl- or trialkyl-ε-caprolactones in each of which two or three alkyl groups have substituted for a like number of hydrogen atoms on the same carbon atom or different carbon atoms other than the carbon atom at the ε-position; and substituted ε-caprolactones in each of which one or more alkoxyl, aryl, benzyl, cycloalkyl and/or aralkyl groups are contained as substituent(s).

On the other hand, illustrative examples of δ-valerolactones include 5-valerolactone, 3-methyl-5-valerolactone, 3,3-dimethyl-5-valerolactone, 2-methyl-5-valerolactone, and 3-ethyl-5-valerolactone.

The ring-opening polymerization reaction of the lactone in the presence of the EVOH resin can be conducted by mixing them in a reaction vessel and stirring the thus-obtained mixture in the presence of a conventionally-known ring-opening polymerization catalyst, for example, a titanium compound, a tin compound or the like at a temperature of from 10 to 220°C, preferably at a temperature of from 80 to 220°C for several hours, preferably under a nitrogen gas stream. As an alternative, it is also possible to subject the EVOH resin, as the raw material, and the lactone in heated molten forms to polymerization reaction within a single-screw or twin-screw extruder or a mixer or kneader such as a Banbury mixer, kneader or Brabender. In this manner, the PES-EVOH resin according to the present invention in which the aliphatic polyester is grated on the EVOH resin as the raw material is obtained.

In an initial stage of the reaction in the above-described process, a mixture of the EVOH resin powder as the raw material and the liquid lactone compound is a mechanical mixture and the state of the mixture is heterogeneous. As the their reaction proceeds, the mixture changes into a homogeneous liquid or molten state and eventually, the PES-EVOH resin according to the present invention with the aliphatic polyester grated on the EVOH resin as the raw material can be obtained.

By changing the amount of the aliphatic polylactone polyester grafted on the EVOH resin as the raw material, namely, the weight ratio of the aliphatic polylactone polyester to the EVOH resin as the raw material, the PES-EVOH resin according to the present invention can be obtained as a PES-EVOH resin having both the properties of the EVOH resin as the raw material and the properties of the grafted aliphatic polyester.

In the PES-EVOH resin according to the present invention, the content of segments of the EVOH resin forming the backbone is from 98 to 2 wt.%, the content of segments of the aliphatic polyester grated on the backbone is from 2 to 98 wt.%, and the number average molecular weight (calibrated with the number average molecular weight of standard polystyrene as measured by GPC) is from 10,000 to 600,000, preferably from 20,000 to 200,000. Such a PES-EVOH resin can be obtained by reacting 98 to 2 wt.% of the EVOH resin as the raw material with 2 to 98 wt.% of the lactone.

In the PES-EVOH resin according to the present invention, the properties of the EVOH resin, such as oil resistance, solvent resistance, high strength, abrasion resistance and gas barrier property, are primarily exhibited when the content of the EVOH resin segments falls within a range of from 98 to 60 wt.% and the content of the aliphatic polyester segments falls within a range of from 2 to 40 wt.%.

In a PES-EVOH resin in which the content of EVOH resin segments falls within a range of from 59 to 2 wt.% and the content of aliphatic polylactone polyester segments falls within a range of from 41 to 98 wt.%, the properties of the aliphatic polylactone polyester, such as softness and flexibility, flexural resistance, adhesion and forming characteristics, are primarily exhibited.

When the content of aliphatic polylactone polyester segments is controlled within a range of from 15 to 150 parts by weight per 100 parts by weight of the content of EVOH resin segments, the PES-EVOH resin according to the present invention can be provided with the excellent properties of both EVOH resin and aliphatic polylactone polyester.

As has been described above, the PES-EVOH resin according to the present invention can be formed as materials excellent in softness and flexibility, flexural resistance, solvent resistance, forming characteristics, gas barrier property, transparency, safety and the like by variously changing the copolymerization ratio of EVOH resin segments to aliphatic polyester segments. These materials are very useful as films and wrapping materials; warp sizing agents for the treatment of fibers; surface treatment agents for treating textiles and paper; adhesives for plywood; extrusion or injection molding materials for machine parts and precision parts; and binders for coating formulations and inks.

Heat resistance, waterproofness, solvent resistance, mechanical strength and the like can be additionally imparted by crosslinking the PES-EVOH resin with one of various crosslinking agents while using hydroxyl groups still remaining in the resin upon formation of a film with the PES-EVOH resin according to the present invention. Any crosslinking agent is usable insofar as it can react with hydroxyl groups. Illustrative crosslinking agents can include phenol resins, melamine resins, epoxy resins, and compounds containing one or more isocyanate groups.

Applications of the PES-EVOH resin according to the present invention will next be described more specifically with reference to specific examples.

A first application is to use it as a material for the preparation of a coating composition which is useful for formed products of a plasticized vinyl chloride resin.

As a resin available at a low price, excellent in chemical stability and usable over a wide hardness range from a hard resin to a soft resin by varying the amount of a plasticizer to be added, vinyl chloride resin has be used for many years in many applications as interior materials such as PVC wall papers, flooring materials and ceiling materials; sheet materials such as agricultural sheets, tents and canvases; and extruded products such as hoses and tubes.

However, a plasticized vinyl chloride resin contains a great deal of a plasticizer, and is hence accompanied by the drawback that along the passage of time, the plasticizer bleeds out to a surface of a formed product and causes surface staining or mutual blocking of formed products.

According to the present invention, use of the PES-EVOH resin of this invention can provide a coating composition for a formed product of a plasticized vinyl chloride resin, which can prevent bleeding-out of the plasticizer from the formed product of the plasticized vinyl chloride resin to avoid contamination of a surface of the formed product or mutual blocking of formed products and which also imparts softness and flexibility, adhesion, waterproofness, solvent resistance and weatherability to the formed products of the plasticized vinyl chloride.

The coating composition according to the present invention for formed products of a plasticized vinyl chloride resin can be prepared by adding various additives as needed in addition to the PES-EVOH resin of the present invention. Usable examples of such additives include color pigments, extender pigments, ultraviolet light absorbers, ultraviolet light stabilizers, colloidal silica, dispersants, anti-mold agents, and matting agents.

The coating composition according to the present invention can be prepared by adding the PES-EVOH resin in a solid or solution form together with additives to an organic solvent and mixing and dispersing them in a conventionally-known mixer, dispersion mixer or the like.

Use of the coating composition according to the present invention makes it possible to form a film, which is excellent in softness and flexibility, water-proofness, solvent resistance, plasticizer bleeding-out preventing property (gas barrier property), solvent resistance, film strength and the like, on a surface of a formed product of a plasticized vinyl chloride resin. Upon formation of the film, hydroxyl groups in the copolymer can be crosslinked by one of various crosslinking agent as described above. This makes it possible to form, on the surface of the formed product of the plasticized vinyl chloride resin, a film still improved in heat resistance, waterproofness, solvent resistance, mechanical strength, plasticizer bleeding-out preventing property and the like.

As an illustrative method for forming the film of the coating composition according to the present invention on the surface of the formed product of the plasticized vinyl chloride resin, the composition is adjusted to a suitable concentration where it is a solution or the composition is dissolved in one of various solvents where it is in a solid form. A film is then formed on the surface of the formed product of the plasticized vinyl chloride resin, for example, by using a coating method such as gravure coating, knife coating, reverse-roll coating, dipping, brushing, air spraying or airless spraying.

Examples of usable solvents include glycols such as ethylene glycol, glycerin and diethylene glycol; dimethyl sulfoxide; N,N-dimethylformamide; and mixed solutions of lower alcohols and water. In practice, use of a mixed solution of a lower alcohol and water is preferred.

As another film-forming method, it is also possible to use the method that the PES-EVOH resin according to the present invention is directly melt-formed into a film or sheet, followed by the lamination onto the surface of the formed product of the plasticized vinyl chloride resin. Upon lamination, heat lamination can be directly conducted by a conventionally-known method or lamination can be carried out via one of various adhesives such as urethane-base adhesives and acrylic adhesives.

Formed products of a plasticized vinyl chloride resin, which are each coated with a film made of the PES-EVOH resin according to the present invention, are very useful as PVC wall papers, PVC sheets, desk mats, PVC leathers, PVC films, PVC hoses, and PVC tubes.

A second application of the PES-EVOH resin according to the present invention is its use as a forming material for a gas barrier material.

To impart gas barrier property to a plastic film or sheet, it has conventionally be performed to apply a gas barrier film to a surface of the plastic film or sheet. As materials for such gas barrier films, polyvinylidene chloride resin (hereinafter abbreviated as "PVDC resin"), polyvinyl alcohol resin (hereinafter abbreviated as "PVA resin") and EVOH resin are known as representative ones.

PVDC resin is however a chlorine-containing resin, so that it involves a serious problem in its disposal as a waste such as incineration or its recycling subsequent to its use as a product.

Further, PVA resin is accompanied by the drawbacks that its fusing temperature and heat decomposition temperature are extremely close to each other and its melt extrusion or the like is hence impossible and that under high humidity, a film of PVA resin is soft and tough but under low humidity, it looses softness, is brittle and is liable to tearing.

On the other hand, EVOH resin permits melt extrusion or the like and has excellent transparency. It is however accompanied by the problem that it is inferior in softness and flexibility and its bending or the like causes whitening or tends to form cracks and hence to impair gas barrier property.

According to the present invention, the use of the PES-EVOH resin of the present invention provides a gas barrier material which comprises a plastic film or sheet and a film of the PES-EVOH resin of the present invention on at least one side of the plastic film or sheet.

Illustrative of plastic films or sheets usable in the present invention are those employed as ordinary wrapping materials such as films or sheets of polyolefins (polyethylene, polypropylene, and copolyolefins), polyesters (polyethylene terephthalate, polybutylene terephthalate, polyethylene naphthalate and copolyesters), polyamides (nylon-6, nylon-66 and copolyamides), polyvinyl chloride, polyimides and polystyrene. These films or sheets may be added with known additives such as antistatic agents, ultraviolet light absorbers, plasticizers, lubricants, and coloring matters.

To product the gas barrier material according to the present invention, a coating composition for the formation of a gas barrier film is prepared firstly by adding various additives to the PES-EVOH resin of the present invention as needed. Usable examples of such additives include color pigments, extender pigments, ultraviolet light absorbers, ultraviolet light stabilizers, colloidal silica, dispersants, anti-mold agents, and matting agents.

The coating composition can be prepared by adding the PES-EVOH resin in a solid or solution form together with additives to an organic solvent such as that described above and mixing and dispersing them in a conventionally-known mixer, dispersion mixer or the like.

The coating of a surface of a plastic film or sheet with the PES-EVOH resin according to the present invention can be conducted in the same manner as in the above-described formed product of the plasticized vinyl chloride resin.

A gas barrier material having a film excellent in gas barrier property, softness, waterproofness, solvent resistance, film strength and adhesion can be obtained as described above. Incidentally, a film still improved in heat resistance, waterproofness, solvent resistance, mechanical strength, plasticizer bleeding-out preventing property and the like can be obtained by crosslinking hydroxyl groups in the PES-EVOH resin with one of such various crosslinking agents as described above upon formation of the film.

The gas barrier material according to the present invention can also be used by laminating a heat-sealable thermoplastic resin layer on the gas barrier film, arranging a printed layer on the gas barrier film, or laminating plural resins on the gas barrier film with adhesive layers interposed therebetween, as needed.

Multilayer laminates obtained in this manner can be subjected further to reheating and stretching by a vacuum molding machine, compression molding machine, stretch-and-blow molding machine or the like or to heated stretching by a uniaxial or biaxial stretching machine.

The present invention will hereinafter be described in further detail by the following Examples and Comparative Examples, in which all designations of "part" or "parts" are by weight.

### I. Production Examples of PES-EVOH Resins

### Examples 1-5

In each example, an EVOH resin having an ethylene content of 31.5 mole % and a saponification degree of 98.5 mole % at vinyl acetate moieties thereof and ε-caprolactone were charged at the corresponding ratio shown in Table 1 in a flask. Further, tetrabutyl titanate was charged in a proportion of 0.1 part per 100 parts of the ε-caprolactone, and the resulting mixture as heated at a heating velocity of 1°C/2-3 minutes with stirring under a nitrogen gas stream.

At 160-170°C, the reaction mixture gradually changed from a previous heterogeneous system into a homogeneous solution. At 180-200°C, it became a perfect homogeneous system. At 200-220°C, the reaction was allowed to proceed for 6 hours so that a PES-EVOH resin according to the present invention was obtained.

The above-obtained product was confirmed to be a graft polymer from the facts that the product was soluble in ε-caprolactone although the EVOH resin was insoluble in it, that free OH groups of the EVOH resin decreased with the progress of the reaction and that the fusing temperature of the product was different from the fusing temperature of a polyester which was a ring-opened polymer of the EVOH resin and ε-caprolactone.

Properties of the PES-EVOH resins so obtained in the respective Examples and the EVOH resin (comparative example) employed in the Examples were evaluated, and the results are presented in Table 1. The evaluations of the individual physical properties were performed by the following methods.

### (1) Hardness:

The resin of each of Examples 1-5 and the Comparative Example was compression-formed at 170°C. Using the thus-obtained sheet, the hardness was measured by an A-type hardness meter (JIS-A) and a D-type hardness meter (Rockwell) in accordance with JIS K-6301.

### (2) Strength characteristics:

A No. 3 dumbbell specimen was prepared from the above-described compression-formed sheet of each of the resins of Examples 1-5 and the Comparative Example in accordance with JIS K-7311, and its 100% modulus, tensile strength and elongation were measured following the corresponding methods prescribed in the same JIS.

### (3) Vicat softening point:

The softening point of each of the resins of Examples 1-5 and the Comparative Examples was measured in accordance with JIS K-7206.

### (4) Anti-flexural fatigue test:

A compression-formed sheet of each of the resins of Examples 1-5 and the Comparative Example was subjected to flexural fatigue at a repetition speed of 40 times/min in accordance with ASTM-D671, and the number of repetitions at which a crack occurred was recorded.

### (5) Izod impact strength:

A test piece was prepared from a compression-formed sheet of each of the resins of Examples 1-5 and the Comparative Example, and was measured in accordance with JIS K-7110 (measurement temperature: 25°C).

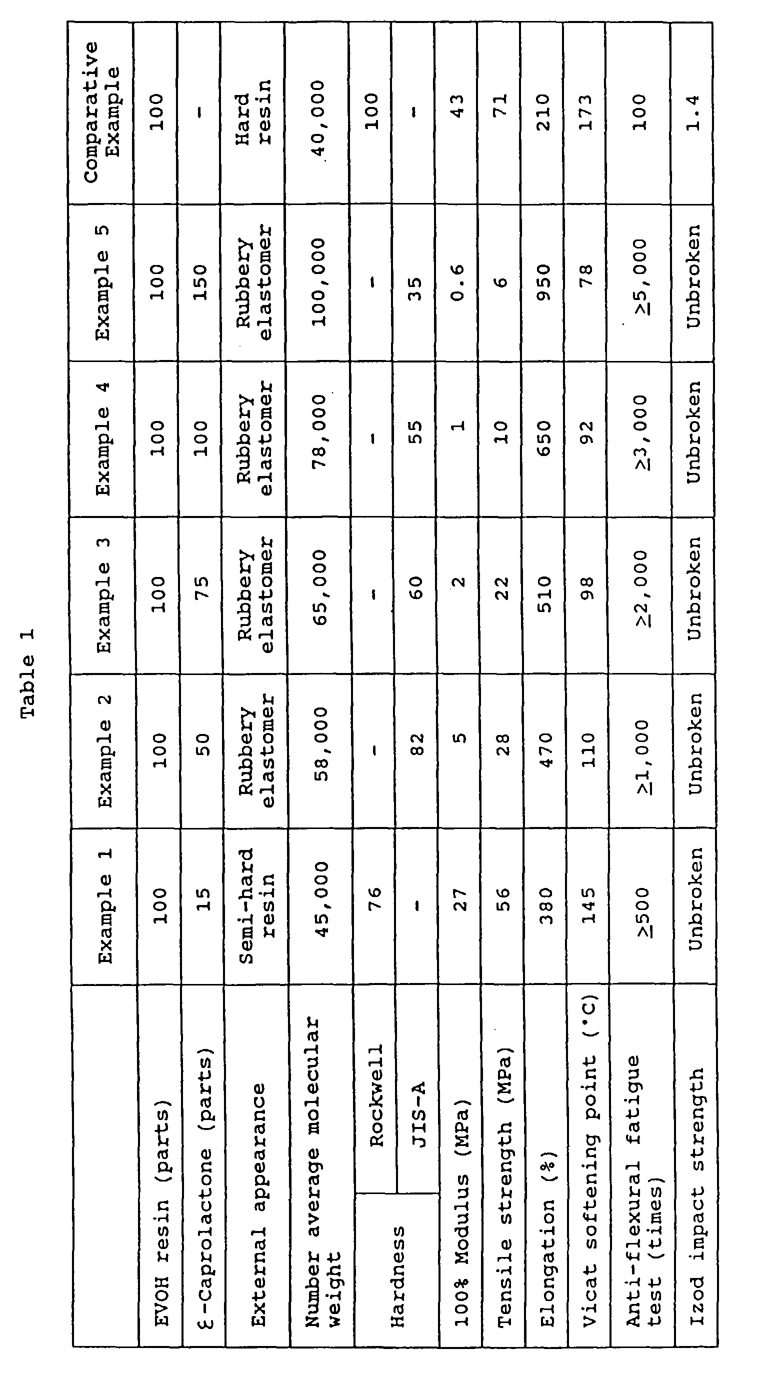

### II. Examples Directed to Coating Compositions for Formed PVC Products

### Examples 1-3

In each example, the corresponding one of the resins obtained in Examples 1-3 directed to the production of PES-EVOH resins was dissolved in a 3:7 (by weight) mixed solvent of isopropyl alcohol (IPA) and water, whereby a resin solution having a solid content of 20% were obtained.

Both sides of a soft PVC sheet (thickness: 3 mm) were coated with the resin solution by a bar coater to give a dry film thickness of 10-20 µm, followed by drying at 80°C for 30 seconds to form films. The resin-coated soft PVC sheet was tested by the following methods.

### (1) Amount of bled-out plasticizer:

The soft PVC sheet, which had been cut into 50 mm x 50 mm, was placed between polyethylene sheets whose total weight had been measured in advance. The polyethylene sheets with the soft PVC sheet placed therebetween were in turn sandwiched between glass plates. In this state, the assembly was left over under a load of 5 kg for 24 hours in a constant-temperature chamber which was maintained at 70°C. The assembly was then taken out of the constant-temperature chamber, the polyethylene sheets were peeled off, and the total weight of the polyethylene sheets was measured.

The smaller the weight increase of the polyethylene sheets, the smaller the amount of the plasticizer bled out from the soft PVC sheet.

### (2) Anti-staining Properties:

Each soft PVC sheet, which had been cut into 50 mm x 50 mm, was brought into a contiguous relationship with a copying paper which had been printed beforehand by electrophotography. They were sandwiched between glass plates. In this state, assemblies obtained as described above were left over under a load of 3 kg for 24 hours and 72 hours, respectively, in a constant-temperature chamber which was maintained at 50°C. Each assembly was taken out of the constant-temperature chamber, the soft PVC sheet was peeled off from the copying paper and observed for the degree of stain. The observation results will be indicated as follows:
- A:: No stain.
- B:: Localized stain.
- C:: The sheet was stained over the entire area thereof.

### (3) Adhesion:

One hundred squares of 1 cm x 1 cm were cut in each of the above-formed films by a knife, and a peeling test was conducted using an adhesive cellophane tape.

### (4) Softness and flexibility:

Each surface-coated soft PVC sheet was bent 20 times at room temperature, and each film was visually observed for its conditions. The observation results will be indicated as follows:
- A:: No change.
- B:: Whitened.
- C:: Cracked.

### Examples 4-5

In each example, a self-emulsifiable polyisocyanate (product of Nippon Polyurethane Industry Co., Ltd.) was added to each of the resin solutions of the resins of Production Examples 2 and 3, which resin solutions were employed in Examples 2 and 3, respectively. As in Examples 1-3, a soft PVC sheet was coated with the resulting solution, followed by drying at 80°C for 30 seconds. After the thus-coated soft PVC sheet was left over for one day at room temperature, it was tested as in Examples 1-3.

### Examples 6-8

In each example, the corresponding one of the resins obtained in Production Examples 1-3, respectively, was melt-extruded through a T-die by an extruder having a barrel diameter of 60 mm, whereby a film of 20 µm in thickness was produced. The film was laminated on a soft PVC sheet with a polyurethane-base adhesive to prepare a resin-coated soft PVC sheet. The resin-coated soft PVC sheet was tested as in the preceding Examples.

### Comparative Example 1

In the same manner as in the preceding Examples, a soft PVC sheet was coated with a DMSO solution (solid content: 15%) of the EVOH resin, which had been employed as a raw material in the Production Examples, to give a dry coat thickness of 10-20 µm. Similar tests as in the individual Examples were conducted with respect to the thus-obtained resin-coated soft PVC sheet.

### Comparative Example 2

Using the EVOH resin employed as a raw material in the Production Examples, a film of 20 µm in thickness was produced in a similar manner as in Examples 6-8. The film was laminated on a soft PVC sheet with a polyurethane-base adhesive. Similar tests as in the individual Examples were conducted with respect to the thus-obtained resin-coated soft PVC sheet.

### Comparative Example 3

A soft PVC sheet was coated with a coating composition, which had been prepared by adding a curing agent ("Colonate HX", trade name; product of Nippon Polyurethane Industry Co., Ltd.) to a fluororesin for PVC ("FLUOROTOP", trade mark; product of Asahi Glass Co., Ltd.), to give a dry coat thickness of 10-20 µm. Similar tests as in the individual Examples were conducted with respect to the fluororesin-coated soft PVC sheet.

The test results in the individual Examples and Comparative Examples are presented in Table 2.

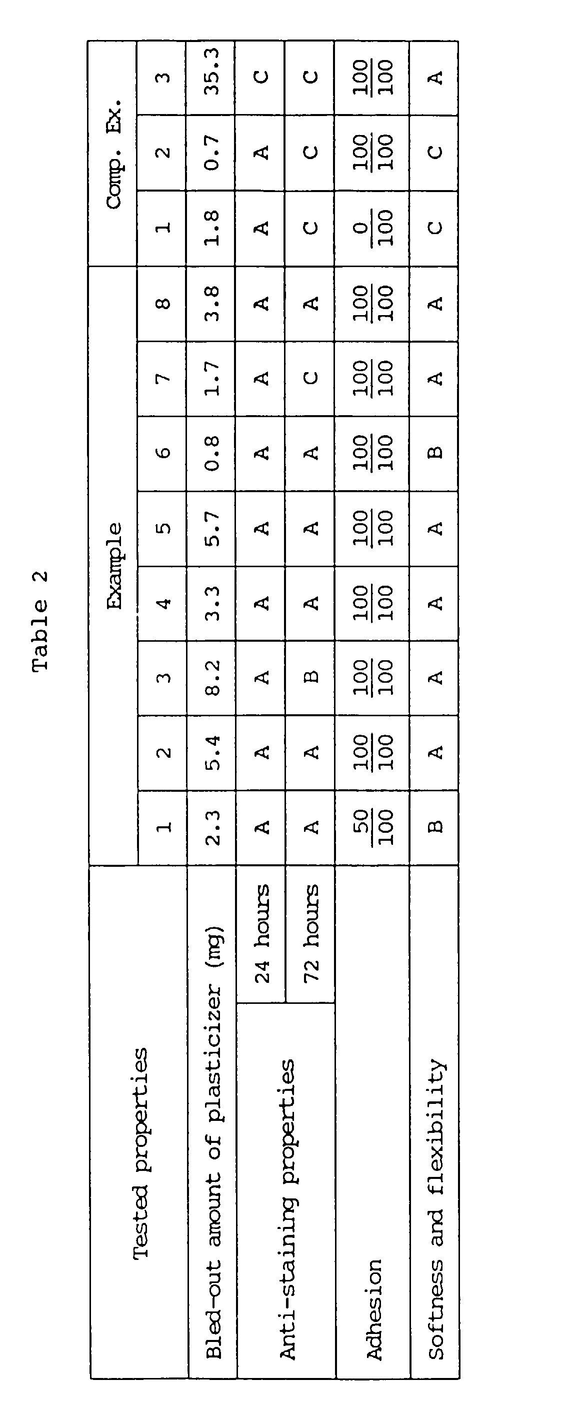

### III. Examples Directed to Gas Barrier Materials

### Examples 1-3

In each example, the corresponding one of the resins obtained in Production Examples 1-3 was dried at 60°C for 1 day in a vacuum and was then formed at 210°C into a film of 20 µm in thickness by a cast film extruder. The film was thermally laminated on one side of a biaxially-stretched polypropylene film of 20 µm in thickness (product of Mitsubishi Chemical Corporation). Using a gas permeability measuring instrument ("MOCON OXTRAN-10/50A", trade name; manufactured by Modern Control Company), the amount of oxygen permeated through the film at 23°C was measured.

### Comparative Example 1

A film of 20 µm in thickness was produced by casting from a 15% aqueous solution of polyvinyl alcohol (polymerization degree: 550) whose saponification degree was 98.5%, and the amount of oxygen permeated through the film was measured as in the Examples.

### Comparative Example 2

Using an EVOH resin film having a thickness of 20 µm and a copolymerized ethylene proportion of 44 mole %, the amount of permeated oxygen was measured as in the Examples.

### Comparative Example 3

Using a biaxially-stretched polypropylene film of 20 µm in thickness (product of Mitsubishi Chemical Corporation), the amount of permeated oxygen was measured as in the Examples.

With respect to each of the films of the above Examples and Comparative Examples, its flexibity was also evaluated. The evaluation results are presented together with the measurement results of the permeated oxygen amounts in Table 3.

The flexibility of each film was determined by bending the film 1,000 times at room temperature and then visually observing its condition. The observation results will be indicated as follows:
- A:: No abnormality occurred.
- B:: Whitening and some cracks occurred.
- C:: Substantial cracks occurred.

**Table 3**

| | Amount of permeated oxygen (cc/m²·day·atm) | Flexibility∗ |
|---|---|---|
| Example 1 | 2.2 | A |
| Example 2 | 4.8 | A |
| Example 3 | 9.3 | A |
| Comp. Ex. 1 | 4.6 | C |
| Comp. Ex. 2 | 1.6 | B |
| Comp. Ex. 3 | 2500 | B |

## Claims

1. A polyester-modified ethylene-vinyl alcohol copolymer resin, characterized in that an aliphatic polylactone polyester is grafted on an ethylene-vinyl alcohol copolymer, the content of said polyester is from 2 to 98 wt.%, the content of said ethylene-vinyl alcohol copolymer is from 98 to 2 wt.%, and the number average molecular weight is from 10,000 to 600,000.

2. A polyester-modified ethylene-vinyl alcohol copolymer resin according to claim 1, wherein segments of said ethylene-vinyl alcohol copolymer are composed of 20 to 60 mole % of ethylene units and 60 to 20 mole % of vinyl acetate units, and at least 90 mole % of said vinyl acetate units have been saponified.

3. A polyester-modified ethylene-vinyl alcohol copolymer resin according to claim 1, wherein segments of said aliphatic polylactone polyester are composed of a ring opened polymer of an ε-caprolactone or δ-valerolactone.

4. A polyester-modified ethylene-vinyl alcohol copolymer resin according to claim 1, wherein segments of said ethylene-vinyl alcohol copolymer amount to 95 to 50 wt.% and segments of said aliphatic polylactone polyester amount to 5 to 50 wt.-%.

5. A polyester-modified ethylene-vinyl alcohol copolymer resin according to claim 1, wherein segments of said ethylene-vinyl alcohol copolymer amount to 95 to 45 wt.t and segments of said aliphatic polylactone polyester amount to 5 to 55 wt.-%.

6. A polyester-modified ethylene-vinyl alcohol copolymer resin according to claim 1, wherein the weight ratio of segments of said ethylene-vinyl alcohol copolymer to segments of said aliphatic polylactone polyester is from 100:15 to 100:150.

7. A process for the production of a polyester modified ethylene-vinyl alcohol copolymer resin, characterized in that a lactone is subjected to ring opening polymerization in the presence of an ethylene-vinyl alcohol copolymer resin.

8. A coating composition for a formed article of a plasticized vinyl chloride resin, characterized in that said coating composition comprises an organic solvent and a polyester-modified ethylene-vinyl alcohol copolymer resin according any one of claims 1-6.

9. A formed article of a plasticized vinyl chloride resin, surface-ccated with the coating composition according to claim 8.

10. A gas barrier material characterized in that said gas barrier material comprises a plastic film or sheet and a film of a polyester-modified ethylene-vinyl alcohol copolymer resin according to any one of claims 1-6 formed on at least one side of said plastic film or sheet.

## Patentansprüche

1. Polyester-modifiziertes Ethylen-Vinylalkohol-Copolymerharz, dadurch gekennzeichnet, daß ein aliphatischer Polylactonpolyester auf ein Ethylen-Vinylalkohol-Copolymer gepfropft ist, wobei der Anteil des Polyesters 2 bis 98 Gew.% ist, der Anteil des Ethylen-Vinylalkohol-Copolymers 98 bis 2 Gew.% ist und das Zahlenmittel des Molekulargewichts 10 000 bis 600 000 ist.

2. Polyester-modifiziertes Ethylen-Vinylalkohol-Copolymerharz nach Anspruch 1, wobei Segmente des Ethylen-Vinylalkohol-Copolymers aus 20 bis 60 Mol% Ethyleneinheiten und 60 bis 20 Mol% Vinylacetateinheiten zusammengesetzt sind und mindestens 90 Mol% der Vinylacetateinheiten verseift worden sind.

3. Polyester-modifiziertes Ethylen-Vinylalkohol-Copolymerharz nach Anspruch 1, wobei Segmente des aliphatischen Polylactonpolyesters aus einem durch Ringöffnung entstandenen Polymer eines ε-Caprolactons oder δ-Valerolactons zusammengesetzt sind.

4. Polyester-modifiziertes Ethylen-Vinylalkohol-Copolymerharz nach Anspruch 1, wobei sich die Segmente des Ethylen-Vinylalkohol-Copolymers auf 95 bis 50 Gew.% belaufen und die Segmente des aliphatischen Polylactonpolyesters sich auf 5 bis 50 Gew.% belaufen.

5. Polyester-modifiziertes Ethylen-Vinylalkohol-Copolymerharz nach Anspruch 1, wobei sich die Segmente des Ethylen-Vinylalkohol-Copolymers auf 95 bis 45 Gew.% belaufen und die Segmente des aliphatischen Polylactonpolyesters sich auf 5 bis 55 Gew.% belaufen.

6. Polyester-modifiziertes Ethylen-Vinylalkohol-Copolymerharz nach Anspruch 1, wobei das Gewichtsverhältnis der Segmente des Ethylen-Vinylalkohol-Copolymers zu Segmenten des aliphatischen Polylactonpolyesters 100:15 bis 100:150 ist.

7. Verfahren zur Herstellung eines Polyester-modifizierten Ethylen-Vinylalkohol-Copolymerharzes, dadurch gekennzeichnet, daß ein Lacton in Gegenwart eines Ethylen-Vinylalkohol-Copolymerharzes Ringöffnungspolymerisation unterzogen wird.

8. Beschichtungszusammensetzung für einen Formgegenstand aus einem Weichmacher enthaltenden Vinylchloridharz, dadurch gekennzeichnet, daß die Beschichtungszusammensetzung ein organisches Lösungsmittel und ein Polyester-modifiziertes Ethylen-Vinylalkohol-Copolymerharz nach einem der Ansprüche 1-6 umfaßt.

9. Formgegenstand aus einem Weichmacher enthaltenden Vinylchloridharz, der mit der Beschichtungszusammensetzung nach Anspruch 8 oberflächenbeschichtet ist.

10. Gassperrmaterial, dadurch gekennzeichnet, daß das Gassperrmaterial einen Kunststofffilm oder eine Kunststofffolie und einen Film aus einem Polyester-modifizierten Ethylen-Vinylalkohol-Copolymerharz nach einem der Ansprüche 1-6, gebildet auf mindestens einer Seite des Kunststofffilms oder der Kunststofffolie, umfaßt.

## Revendications

1. Résine de copolymère éthylène-alcool vinylique modifié par un polyester, caractérisée par le fait qu'un polyester polylactone aliphatique est greffé sur un copolymère éthylène-alcool vinylique, la teneur en ledit polyester est de 2 à 98% en poids, la teneur en ledit copolymère éthylène-alcool vinylique est de 98 à 2% en poids, et la masse moléculaire moyenne en nombre est de 10 000 à 600 000.

2. Résine de copolymère éthylène-alcool vinylique modifié par un polyester, selon la revendication 1, dans laquelle les segments dudit copolymère éthylène-alcool vinylique sont composés de 20 à 60% en moles d'unités éthylène et 60 à 20% en moles d'unités acétate de vinyle, et au moins 90% en moles desdites unités acétate de vinyle ont été saponifiés.

3. Résine de copolymère éthylène-alcool vinylique modifié par un polyester, selon la revendication 1, dans laquelle les segments dudit polyester polylactone aliphatique sont composés d'un polymère obtenu par ouverture de cycle d'une ε-caprolactone ou δ-valérolactone.

4. Résine de copolymère éthylène-alcool vinylique modifié par un polyester, selon la revendication 1, dans laquelle les segments dudit copolymère éthylène-alcool vinylique représentent de 95 à 50% en poids, et les segments dudit polyester polylactone aliphatique représentent de 5 à 50% en poids.

5. Résine de copolymère éthylène-alcool vinylique modifié par un polyester, selon la revendication 1, dans laquelle les segments dudit copolymère éthylène-alcool vinylique représentent de 95 à 45% en poids, et les segments dudit polyester polylactone aliphatique représentent de 5 à 55% en poids.

6. Résine de copolymère éthylène-alcool vinylique modifié par un polyester, selon la revendication 1, dans laquelle le rapport en poids des segments dudit copolymère éthylène-alcool vinylique aux segments dudit polyester polylactone aliphatique est de 100:15 à 100:150.

7. Procédé de production d'une résine de copolymère éthylène-alcool vinylique modifié par un polyester, caractérisé par le fait qu'une lactone est soumise à une polymérisation par ouverture de cycle en présence d'une résine de copolymère éthylène-alcool vinylique.

8. Composition de revêtement pour un article façonné en une résine de chlorure de vinyle plastifiée, caractérisée par le fait que ladite composition de revêtement comprend un solvant organique et une résine de copolymère éthylène-alcool vinylique modifié par un polyester, telle que définie à l'une quelconque des revendications 1 à 6.

9. Article façonné en une résine de chlorure de vinyle plastifiée, revêtu en surface par la composition de revêtement telle que définie à la revendication 8.

10. Matière formant barrière aux gaz, caractérisée par le fait qu'elle comprend un film ou une feuille de matière plastique et un film d'une résine de copolymère éthylène-alcool vinylique modifié par un polyester, telle que définie à l'une des revendications 1 à 6, formé sur au moins une face dudit film ou de ladite feuille en matière plastique.
